# EUROPEAN PATENT SPECIFICATION

(11) **EP 1 963 233 B1**
(45) Date of publication and mention of the grant of the patent: **30.04.2014**
(21) Application number: 05822617.6
(22) Date of filing: 23.12.2005
(51) Int. Cl.: C03B 37/03, C03B 37/027

(54) **METHOD AND APPARATUS FOR THE PRODUCTION OF OPTICAL FIBERS WITH REDUCED POLARIZATION MODE DISPERSION**
VERFAHREN UND VORRICHTUNG ZUR HERSTELLUNG VON LICHTLEITFASERN MIT VERRINGERTER POLARISATIONSMODENDISPERSION
PROCÉDÉ ET APPAREIL POUR LA PRODUCTION DE FIBRES OPTIQUES AVEC DISPERSION EN MODE DE POLARISATION RÉDUIT

(43) Date of publication of application: 03.09.2008
(73) Proprietor: Prysmian S.p.A., 20126 Milano (IT)
(72) Inventor: PATA, Roberto, 20126 Milano (IT); ROBA, Giacomo, Stefano, 20126 Milano (IT); SARCHI, Davide, 20126 Milano (IT); TEDESCHI, Marco, I-20126 Milano (IT)
(74) Representative: Raimondi, Margherita
(86) International application number: PCT/EP2005/013998
(87) International publication number: WO 2007/073754

(56) References cited:
- WO-A-97/07067
- PATENT ABSTRACTS OF JAPAN vol. 1999, no. 02, 26 February 1999 (1999-02-26) -& JP 10 310456 A (FURUKAWA ELECTRIC CO LTD:THE), 24 November 1998 (1998-11-24)
- PATENT ABSTRACTS OF JAPAN vol. 2003, no. 12, 5 December 2003 (2003-12-05) -& JP 2003 327445 A (FUJIKURA LTD), 19 November 2003 (2003-11-19)

## Description

The present invention relates to a method and an apparatus for the production of optical fibers.

A light travelling in an optical fiber has two polarization modes. For optical fibers that are perfectly circularly symmetric in both geometry and internal and applied stress, operation at a wavelength or in a wavelength range which is regarded as "single-moded" actually supports two orthogonal polarization modes wherein the two polarization modes are degenerate, propagating at the same group velocity and with no-time delay after travelling the same distance in the fiber.

In practical single mode fibre, various imperfections such as asymmetrical lateral stress and a non-circular core typically break the circular symmetry of the ideal fiber. As a result, the two polarization modes propagate with different propagation constants. The difference between the propagation constants is termed birefringence, the magnitude of the birefringence being given by the difference in the propagation constants of the two orthogonal modes.

Birefringence causes the polarization state of light propagating in the fiber to evolve periodically along the length of the fiber. In addition to causing periodic changes in the polarization state of light travelling in a fiber, the presence of birefringence means that the two polarization modes travel at different group velocities, the difference increasing as the birefringence increases. The differential time delay between the two polarization modes is called Polarization Mode Dispersion (PMD).

PMD causes signal distortion, thus is detrimental in high bit rate and analog communication systems.

PMD can be reduced by spinning the fiber.

To the purpose of the present description and claims, by fiber spinning we mean applying a torsion along the axis of the optical fiber; more in particular, unless differently specified, in the present description and claim by fiber spinning we mean a torsion applied alternatively in opposite directions ("alternate spinning"), i.e. the fiber has some turns in one direction followed by some turns in the opposite direction. Preferably, when such alternate spinning is applied, the overall torsion in the resulting fiber is generally null, or has a very small value.

During the spinning process, a fiber undergoes art axial rotation in one direction from zero to the maximum rotation value (spin/m), remains at such maximum rotation value and then decreases the rotation down to zero and further to a negative rotation value, i.e. rotation in the opposite direction.

The function by which such rotation varies in time is called spin function

The applied spin function and the obtained spin function typically differ, depending on various factors of the process and of the used apparatus, which include, for example., the type of applied spin function, the features of the spinning apparatus, e.g. possible fiber slippage or the like may take place, the overall responsiveness of the drawing tower etc.

US 5,298,047 discloses a method of making optical fiber, typically single mode fiber, that can be used to produce fiber having low PMD. The method comprises providing a conventional optical fiber preform, heating at least a portion of the preform to a conventional draw temperature, and drawing optical fiber from the heated preform in such a way that a spin is impressed on the fiber. A spin is "impressed" on the fiber herein if fiber material in the hot zone is caused to be torsionally deformed, with the deformation being frozen into the fiber, such that the fiber exhibits a permanent "spin", i.e., a permanent torsional deformation.

EP 0 785 913 discloses a method wherein a torque is applied to a fiber by running the fiber itself between a pair of wheels which rotate in mutually opposite senses and are displaced back and forth relative one another in a direction substantially perpendicular to the direction of displacement of the fiber through the wheels; the wheels are arranged in such a way that the fiber runs substantially tangential to the curved surface of the wheels themselves and is pressed therebetween in order to obtain the frictional force necessary to transmit the torque and obtain the twisting action.

According to this document, the pressing action exerted on the fiber to be spinned should be only to ensure that the fiber is rolled between the wheels, without fiber slip. The pressing is to be controlled so to avoid an excess causing mechanic stress on the fiber.

However, the Applicant observed that when spinning is applied to a fiber by pressing the same fiber between two rollers, the applied pressure is a critical parameter, in that an excessive pressure causes damages to the optical fiber, while lower pressure values progressively cause fiber slippage which results into a spin in the fiber significantly different from the applied spin, with poor reproducibility in an industrial process.

In particular, the Applicant noticed that a drawing/spinning process effected by pressing the optical fiber between the rollers often resulted in an optical fiber provided with a spin function not constant along the length thereof and not constant for ubsequent fibers produced with the same spinning parameters. This prior art is also disclosed into JP-10310456. JP 2000-143277 and JP 2003-137587 disclose a spinning apparatus in which all pulleys and rollers are arranged with parallel axes and which comprises three rollers/pulleys around which the fiber is wound by an arc, actively cooperating in causing the spinning or twisting effect on the fiber.

Within the present invention the Applicant perceived that an effective spinning can be reproducibly applied to the fiber, without pressing the fiber between two rollers, if the friction required to cause the desired rolling of the fiber is obtained by extending the contact surface between the fiber and the roller beyond the point-like contact obtained in case of tangential contact of the fiber with the rollers.

In particular, the Applicant found that a spinning apparatus and process in which the fiber to be spun is wound by a given arc around at least one spin roller, preferably two spin rollers, spaced apart of a distance greater than the optical fiber diameter provide an optical fiber with a spin value significantly more constant along the optical fiber than that obtained with the prior art methods, without causing any significant damage to the optical fiber.

In a first aspect, the present invention relates to a method for manufacturing an optical fiber comprising the steps of
- drawing a fiber along a drawing direction (Y-Y) from a heated preform, by applying a pulling force to the fiber;
- spinning the fiber while it is drawn,
wherein the step of spinning the fiber comprises the sub-steps of
- arranging a first (3a) and a second (3b) parallel spin rollers by opposite side of the fiber,
- such first and second (3a, 3b) parallel spin rollers being
   - partially overlapping along the drawing direction (Y-Y),
   - spaced apart from each other along the drawing direction,
   - with longitudinal axes laying in a common-plane (A) forming an angle (α1) with respect to a plane orthogonal to the drawing direction; and
   - forming a gap (G) between the relative outer surfaces, greater than the optical fiber outer diameter,
   - winding the fiber on the first spin roller (3a) by a first winding arc, such that a friction force is generated between the fiber and the first spin roller resulting from said first winding arc and from said pulling force;
   - winding the fiber on the second spin roller (3b) by a second winding arc, such that a friction force is generated between the fiber and the second spin roller resulting from said second winding arc and from said pulling force,
   - guiding the fiber in a vertical plane perpendicular to the spin roller axes by causing the fiber to pass between a pair of guiding rollers (2a, **2b) respectively arranged upstream of the first spin roller (3a) and downstream the second spin roller (3b),** said guiding rollers (2a,2b) having axis of rotation orthogonal to the axis of rotation of the spin rollers;
   - axially displacing said first spin roller and said second spin roller one relative to the other such that the fiber is caused to roll over the first and second spin roller surfaces by said friction force.

Preferably, said first spin roller and said second spin roller are displaced in opposite directions.

In a preferred embodiment, the method of the present invention further comprises the step of guiding the fiber on a vertical plane perpendicular to the spin roller axis, at least before the step of winding the fiber on a spin roller.

In particular, the step of guiding the fiber in a vertical plane perpendicular to the spin roller axis includes causing the fiber to pass between a pair of guiding rollers.

More preferably the method of the present invention comprises the step of guiding the fiber in a vertical plane perpendicular to the spin roller axis both before and after the step of winding the fiber on a spin roller.

In a second aspect, the present invention relates to an apparatus for spinning an optical fiber drawn in a drawing direction, comprising
- a first and a second parallel spin rollers having substantially cylindrical outer surfaces, said spin rollers being
   - spaced apart from each other along said drawing direction,
   - forming a gap (G) between their outer surfaces greater than the optical fiber outer diameter;
      and
   - having respective longitudinal axis laying in a common plane (A) forming an angle (α1) with respect to the plane orthogonal to the drawing direction;
- a reciprocating mechanism operatively connected to said spin rollers (3a,3b) for the axial, alternate displacement thereof,
- two pairs of parallel guide rollers (2a,2b) with axes laying in horizontal planes and perpendicular to the axes of said spin rollers (3a,3b), and respectively located upstream and downstream to the couple of spin rollers;
- wherein said first (3a) and second (3b) spin rollers are at least partly overlapping along said drawing direction, so as to cause a fiber drawn therethrough to form a first winding arc over the outer surface of the first spin roller and a second winding arc over the outer surface of the second spin roller (3b).

Preferably, the angle α₁ has a value of from 25° to 35°, more preferably of from 27 to 31°.

Preferably, said winding arc has an extension of from 1.5% to 5% of the circumference of the spin roller.

Preferably, the gap between the spin rollers of the apparatus of the invention is from 1.5 to 2.5 mm wide, more preferably from 1.9 to 2.1 mm wide.

In a preferred embodiment, the apparatus of the present invention comprises at least one pair of parallel guide rollers with axes laying in horizontal planes and perpendicular to the axes of said spin rollers.

More preferably, the apparatus of the present invention comprises two pairs of guide rollers respectively upstream and downstream to the couple of spin rollers.

Preferably, the surface of the spin rollers is coated by a friction coefficient enhancer coating, for example by rubber.

Preferably, the spin rollers are supported, by means of rotation spindles, to respective pivotable frames.

Advantageously, said pivotable frames are supported by props, by means of relevant pivot spindles.

Advantageously, said props are fixed on sledges each movable, e.g. along a pair of tracks. Preferably, said tracks are parallel to the rotation axes of the rotation spindles of the spinner rollers.

The pairs of tracks can be secured to a main base.

Advantageously, said main base is secured on a drawing tower.

Preferably, said main base has an aperture. In a more preferred embodiment, said aperture has an elongated shape, for example rectangular, with a major side parallel to the rotation axes of the rotation spindles of the spin rollers.

Advantageously, said major side of the aperture has length such to allow the fiber to move substantially freely while the spin rollers are traversed.

In a preferred embodiment, the apparatus of the invention comprises a position adjusting apparatus, adjustable to set the distance of the spin rollers one from the other.

Optionally, one of the spin rollers is fixed to the main base.

In a preferred embodiment of the apparatus of the invention, the sledges bearing the spin rollers are operatively connected to the reciprocating mechanism.

Preferably, the reciprocating mechanism comprises at least two connecting elements, each for one of the sledges, linking the sledges to an engine in such a manner to actuate the sledge to move alternate one another.

Further details may be obtained from the following description of a non-limiting example of embodiment of the subject of the present invention provided with reference to the accompanying drawings in which:
- Figure 1:: shows a schematic view of the fiber drawing line, including the spinning apparatus performing the method according to the present invention;
- Figure 2:: shows a schematic perspective view of the spinning apparatus according to the present invention, with an optical fiber running therethrough;
- Figure 3:: shows a schematic perspective view of a preferred embodiment of a spinning apparatus according to the present nvention;
- Figure 4:: shows a perspective view, partially in cross-section of the spinning apparatus of Fig. 4;
- Figure 5:: shows a top view of the spinner of Fig. 4;
- Figure 6:: shows a side view partially in cross-section of the spinner of fig. 4;
- Figure 7:: shows the maximum spin distribution in production as obtained with a spinning apparatus and method according to the prior art;
- Figure 8:: shows the maximum spin distribution in production as obtained with a spinning apparatus and method according to the present invention.

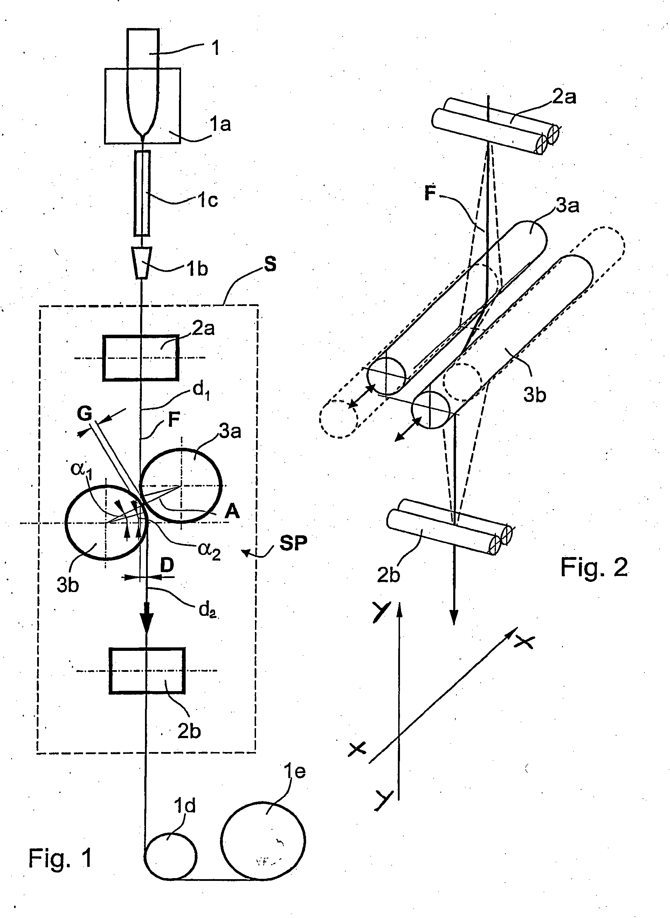

Figs. 1 shows a schematic view of a fiber drawing line. A fiber is drawn along a direction Y-Y, that is generally vertical. A direction X-X, orthogonal to the drawing direction, is also shown.

If not otherwise specified, in the following the drawing direction Y-Y will be considered as vertical.

An optical fiber F is drawn from a preform 1, heated up to a molten or softened state by a furnace 1a.

After having been drawn, the fiber is cooled by a cooling device 1c and, thereafter, it is coated by a coating device 1b provided along the typically vertical path along which the fiber is drawn:

The coated fiber F subsequently enters the spinner S.

After the spinner S, the fiber is pulled by a pulling device 1d, such as a capstan, a pulling roller, a tractor belt or the like, which ensures that the fiber is drawn at a linear velocity VF.

The spinner S, comprises a first couple of guide rollers 2a, positioned upstream a spinning apparatus SP and a second couple of guide rollers 2b positioned downstream said spinning device.

The spinning apparatus SP comprises a couple of parallel spin rollers, 3a, 3b with respective rotation axes laying in a common plane A forming an angle α₁ see Fig. 1 with the plane orthogonal to the longitudinal axis along which the optical fiber is drawn.

In an example, the angle α₁ is set to a value of about 29°. Typically, such angle is comprised in the range of 25-35°, preferably between 27-31°.

In such example, the spin rollers 3a, 3b have a radius of 25 mm and a length of 40 mm. The axes of the spin rollers 3a, 3b are spaced apart from each other by 52 mm, thereby leaving a gap G 2 mm wide, that means a gap G about 8 times larger than the coated optical fiber diameter.

As the gap G between the spin rollers 3a, 3b is significantly wider than the diameter of the coated fiber, typically of about 250 µm the latter is never pressed between the rollers, thereby avoiding fiber damage and minimizing wear and tear of the rollers.

The spin rollers 3a, 3b are free to rotate about their axes, with minimum friction.

When a fiber is drawn-through said spin rollers 3a, 3b, it drives the spin rollers in rotation in opposite directions, that means that when a spin roller rotates clockwise the other rotates counterclockwise. The spin rollers 3a, 3b are supported by respective frames connected to a reciprocating mechanism, by which they are axially displaced back and forth, in opposition of phase to each other, as better described in the following.

In the described exemplary embodiment, a stroke of 10 mm is applied to obtain about twelve fiber turns before reversal. Conveniently, the apparatus allows the stroke to be adjusted for different spin functions.

In operation, the drawn fiber F contacts the outer surface of the upper spin roller 3a and winds around such roller by an arc, contacts the outer surface of the lower spin roller 3b and winds around such roller by an arc, then continues along a drawing line parallel and slightly offset with the previous one. With the given geometry, the fiber winds on the surface of each spin roller 3a, 3b by an arc α₂ of about 13°, corresponding to a circumferential length of about 5.7 mm, i.e. about 3.5% of the roller circumference.

Because of the winding around the spin rollers 3a, 3b the fiber drawing line d₂ downstream the spin roller, 3b is offset by a distance D of about 4.5 mm with respect to the fiber drawing line d₁ upstream the spin roller 3a.

Upstream and downstream the spin rollers 3a, 3b two pairs of parallel guide rollers 2a, 2b are arranged respectively, with their axes perpendicular to the axes of the spin rollers 3a, 3b and laying in planes perpendicular to the drawing line typically horizontal, (as apparent in the perspective view of fig.2).

The rollers of each pair of guide rollers 2a, 2b are spaced from one another by about 1 mm and are arranged so that the fiber passes between them, as shown in fig. 2.

The pairs of guide rollers 2a, 2b are freely rotating around their axes and are supported by relevant frames, (not shown), so that their axes remain fixed with respect to the whole drawing tower.

In the described embodiment, the plane of the axes of the upper pair of guide rollers 2a is 140 mm over the axis of the upper spin roller 3a and the plane of the axes of the lower pair of guide rollers 2b is 170 mm below the axis of the lower spin roller 3b.

The pairs of guide rollers 2a, 2b are aligned so that the fiber passing through the 1 mm gap between them substantially lies in the same vertical plane upstream and downstream the pairs of rollers.

The pairs of rollers 2a, 2b have the function of stopping the deviation caused by the movement of the spin rollers 3a, 3b, thereby maintaining the fiber aligned in a common vertical plane upstream and downstream of the spinner S and preventing possible propagation of vibrations along the fiber.

For example, the pair of guide rollers 2a, 2b are made of aluminum; they are cylindrical, with smooth surface.

During operation the fiber is drawn between the spin rollers 3a, 3b and contacts them in sequence. As the rollers are axially displaced, the drawn fiber rolls over the surfaces of the spin rollers 3a, 3b because of the friction caused by the fiber pulling force and the winding length of the fiber around the rollers.

The axial displacement of the spin rollers 3a, 3b also causes a lateral drag on the fiber in addition to rolling it and this results in deviation of the fiber from the vertical drawing line Y-Y, as shown in fig 2. For example, in the tested embodiment, the amount of deviation is of 2.5 mm, corresponding to about 25% of the roller stroke for an examplary process at a frequency of 3.8 Hz, drawing speed of 18 m/s, and 100 g of drawing tension.

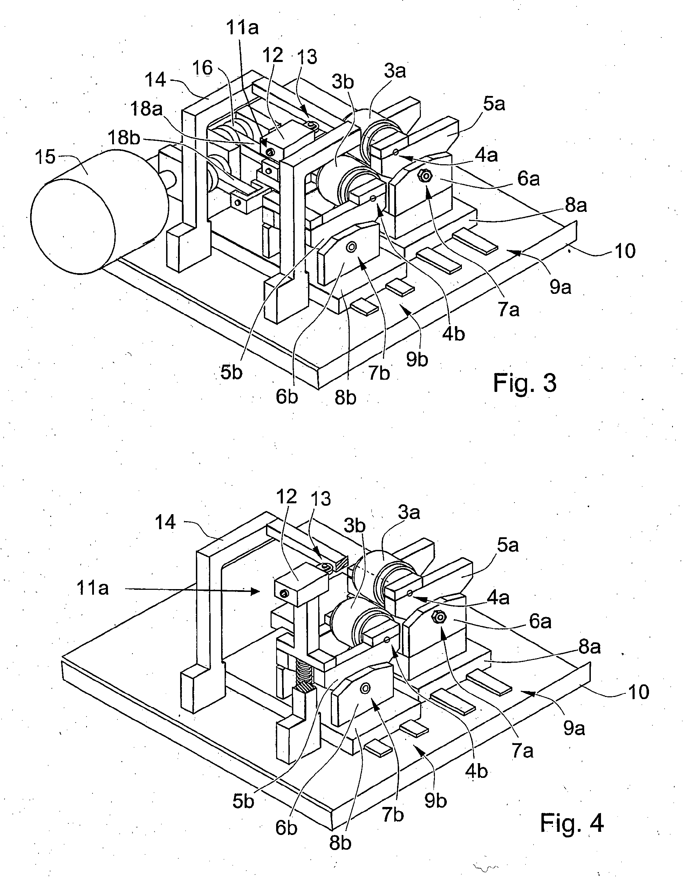

A preferred embodiment of the spinning apparatus SP according to the present invention is shown in Figs 3 to 6 wherein the two pairs of parallel guide rollers 2a, 2b are omitted for sake of simplicity.

The spin rollers 3a, 3b are supported, by means of rotation spindles 4a, 4b, to respective pivotal frames 5a, 5b that are, in turn, supported by props 6a, 6b by means of respective pivot spindles 7a, 7b.

In turn, props 6a, 6b are fixed on sledges 8a, 8b each movable along a pair of tracks 9a, 9b, said tracks 9a, 9b being parallel to the rotation axes of the rotation spindles 4a, 4b of the spin rollers 3a, 3b.

The pairs of tracks 9a, 9b are secured to a main base 10.

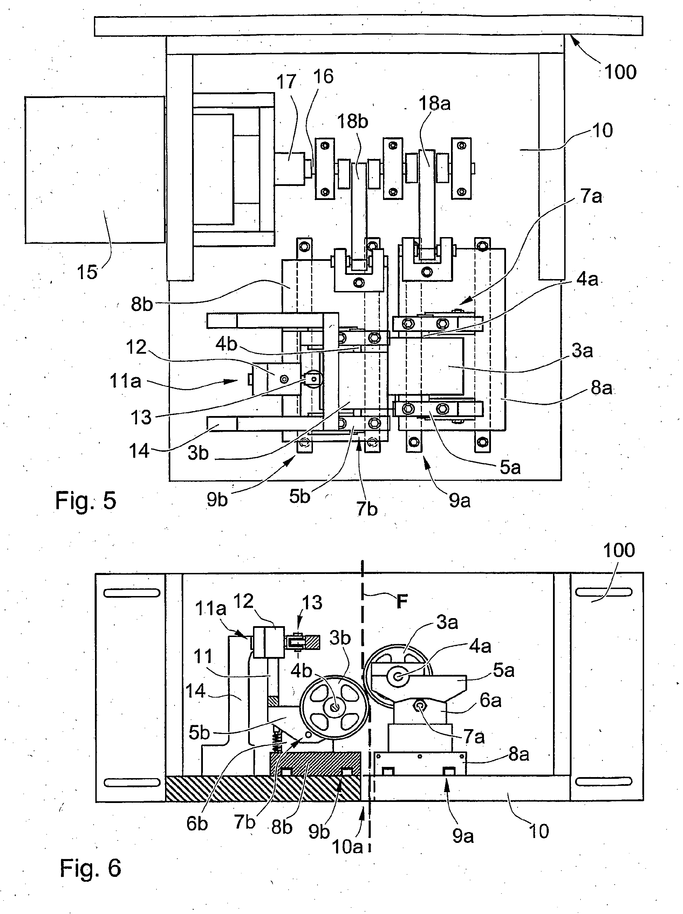

The main base 10, together with a scaffold 100, (fig. 5) is used to keep part of the spinning apparatus shown in Fig. 3-6 secured on the drawing tower.

The main base 10 has an aperture 10a of substantially rectangular shape with the major side parallel to rotation axes of the rotation spindles 4a,4b of the spin rollers 3a,3b. The major side of the aperture 10a has length suitable to allow the fiber to move freely while the spinner rollers 3a,3b are traversed moving along the pairs of tracks 9a,9b as explained in further details here below.

The apparatus comprises a position adjusting apparatus, for example as described in the following.

A T-stem 11 projects upward from the frame 5b. The T-stem 11 bears on the top thereof the block 12 that holds a small wheel 13 with axis perpendicular to the rotation spindles 4a,4b. The position of the small wheel 13 with respect to the block 12 can be adjusted by a screw 11a.

The small wheel 13 contacts a U-shaped.frame 14 projecting upward from the main base 10.

By rotating the screw 11a, the small wheel 13 is moved, e.g., toward or from the U-shaped frame 14 and, as a consequence, the spin roller 3b is moved displaced with respect to the spin roller 3a.

Such a movement can be useful either for adjusting the relative position of the spin rollers 3a, 3b, and/or for facilitating the insertion of an optical fiber through the aperture 10a before starting the drawing/spinning process.

In the embodiment depicted by Fig.s 3-6, the frame 5a bearing the spin roller 3a is be fixed; in alternative, if needed, also the position of the frame 5a and of the spin roller 3a can be made adjustable, either once, for example in connection with the apparatus set-up, or at the beginning of the drawing or even during the operation.

In Figures 3 and 5, an engine 15 is shown. The engine 15 actuates a crankshaft 16 by means of a connector 17. The crankshaft 16 bears two rods 18a,18b connected, respectively, to the sledges 8a,8b.

While rotating, the crankshaft 16 and the two rods 18a,18b cause the sledges 8a,8b - and all the pieces supported thereupon - to move in a manner alternate one another along the respective pairs of tracks 9a, 9b.

### EXAMPLE

The apparatus and method of the present invention were compared with an apparatus using rollers making the spinning action by pressing the optical fiber between them. Ten fiber drawing/spinning processes were carried out by using the pressing roller apparatus and, and ten by using the spinner apparatus according to the present invention. Each process was carried out with a preform yielding a 200 km-long optical fiber

The spin value applied to each fiber was measured by a fiber spin monitor FSM reading such value in continuous during the process, located just below the drawing furnace. It must be observed that, because of many effects associated with the fiber drawing and coiling process, such as the elastic recovery of the fiber torsion, slippages etc, the detected spin/value may not that of the fiber on the reel.

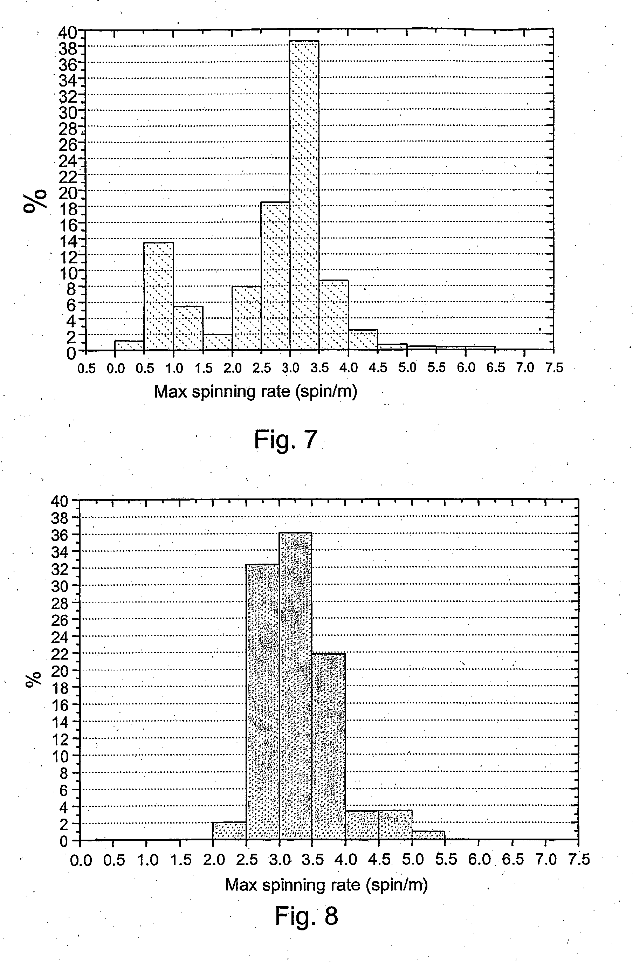

The results of the drawing/spinning process according to the prior art and those according to the present invention are shown in Figure 7 and 8, respectively, which represent

The stroke of the spin rollers was of 10 mm and the reversal frequency thereof of 4 Hz. The drawing speed was of 18 m/s.

As shown by the graph of fig. 7, the detected maximum spin rate, i.e. the amount of spin that the apparatus was able to transfer into the fiber, was distributed in a broad range, such that about 66% of length of the obtained optical fibers had a spin value of 2.5□4 spin/m range. A significant percentage of the spun optical fibers length (about 19%) had a maximum spin value in the range of 0.5□2.0 spin/m, and about 8% had a maximum spin value between 2 and 2.5 spin/m. Low percentages of maximum spinning values higher than 4 spin/m, up to 6.5 spin/m were also measured.

As appear from Figure 8, the spinning/drawing process according to the present invention provided optical fibers with a production distribution in which:
- about 36% of the length was spun at 3.0□3.5 spin/m;
- about 32% of the length was spun at 2.5□3.0 spin/m;
- about 22% of the length was spun at 3.5□4.0 spin/m;

Accordingly, about 90% of the length of the optical fibers obtained according to the present invention art had a maximum spin value comprised in the range of 2.5□4 spin/m. Spin values higher than 4 spin/m were less than 8%; Spin values lower than 2.0 spin/m , and higher than 5.5 spin/m were absent.

The results above confirm that the spinning apparatus and process according to the present invention provides optical fibers with spin value significantly more constant along the fiber length than the fibers produced with a spinning apparatus with rollers pressed one against the other.

The lack of compression of the fiber allows to reduce the risks of mechanical damages or slip of the fiber during the spinning step with respect to the prior art and the reliability of the method and the repeatability of the spin parameters of the obtained fibers is increased.

The geometrical values and process parameters given in the examples above have provided satisfactory results in the applied conditions; in different conditions, different drawing tower etc., these values and parameters could be adjusted to optimize the operation. In particular the ability of the spinner to provide sufficient friction to rotate the optical fiber as require can be adjusted by adjusting the arc by which the fiber is wound around the spin rollers, without any need to press the fiber between spin rollers or to modify other drawing parameters (e.g the pulling force) which may otherwise affect the drawing process and the resulting fiber.

## Claims

1. Method for manufacturing an optical fiber comprising the steps of
- drawing a fiber along a drawing direction (Y-Y) from a heated preform, by applying a pulling force to the fiber;
- spinning the fiber while it is drawn,
wherein the step of spinning the fiber comprises the sub-steps of
- arranging a first (3a) and a second (3b) parallel spin rollers by opposite side of the fiber,
- such first and second (3a, 3b) parallel spin rollers being
- partially overlapping along the drawing direction (Y-Y),
- spaced apart from each other along the drawing direction,
- with longitudinal axes laying in a common-plane (A) forming an angle (α1) with respect to a plane orthogonal to the drawing direction; and
- forming a gap (G) between the relative outer surfaces, greater than the optical fiber outer diameter,
- winding the fiber on the first spin roller (3a) by a first winding arc, such that a friction force is generated between the fiber and the first spin roller resulting from said first winding arc and from said pulling force;
- winding the fiber on the second spin roller (3b) by a second winding arc, such that a friction force is generated between the fiber and the second spin roller resulting from said second winding arc and from said pulling force,
- guiding the fiber in a vertical plane perpendicular to the spin roller axes by causing the fiber to pass between a pair of guiding rollers (2a, 2b) respectively arranged upstream of the first spin roller (3a) and downstream the second spin roller (3b), said guiding rollers (2a,2b) having axis of rotation orthogonal to the axis of rotation of the spin rollers;
- axially displacing said first spin roller and said second spin roller one relative to the other such that the fiber is caused to roll over the first and second spin roller surfaces by said friction force.

2. Method according to claim 1 wherein said first spin roller and said second spin roller are displaced in opposite directions.

3. Apparatus for spinning an optical fiber drawn in a drawing direction, comprising
- a first and a second parallel spin rollers having substantially cylindrical outer surfaces, said spin rollers being
- spaced apart from each other along said drawing direction,
- forming a gap (G) between their outer surfaces greater than the optical fiber outer diameter; and
- having respective longitudinal axis laying in a common plane (A) forming an angle (α1) with respect to the plane orthogonal to the drawing direction;
- a reciprocating mechanism operatively connected to said spin rollers (3a,3b) for the axial, alternate displacement thereof,
- two pairs of parallel guide rollers (2a,2b) with axes laying in horizontal planes and perpendicular to the axes of said spin rollers (3a,3b), and respectively located upstream and downstream to the couple of spin rollers;
- wherein said first (3a) and second (3b) spin rollers are at least partly overlapping along said drawing direction, so as to cause a fiber drawn therethrough to form a first winding arc over the outer surface of the first spin roller and a second winding arc over the outer surface of the second spin roller (3b).

4. Apparatus according to claim **3** wherein the angle α₁ has a value of from 25° to 35°.

5. Apparatus according to claim **4** wherein the angle α₁ has a value of from 27 to 31°.

6. Apparatus according to claim 3 wherein said winding arc has an extension of from 1.5% to 5% of the circumference of the spin roller.

7. Apparatus according to claim 3 wherein the gap between the spin rollers is from 1.5 to 2.5 mm wide.

8. Apparatus according to claim **7** wherein the gap between the spin rollers is from 1.9 to 2.1 mm wide.

9. Apparatus according to claim 3 wherein the surface of the spin rollers is coated by a friction coefficient enhancer coating.

10. Apparatus according to claim 3 wherein the spin rollers are supported, by means of rotation spindles, to respective pivotable frames.

11. Apparatus according to claim **10** wherein said pivotable frames are supported by props, by means of relevant pivot spindles.

12. Apparatus according to claim **11** wherein said props are fixed on sledges.

13. Apparatus according to claim **12** wherein said sledges are movable along a pair of tracks.

14. Apparatus according to claim **13** wherein said tracks are parallel to the rotation axes of the rotation spindles of the spinner rollers.

15. Apparatus according to claim **14** wherein the pairs of tracks are secured to a main base.

16. Apparatus according to claim **15** wherein said main base is secured on a drawing tower.

17. Apparatus according to claim **16** wherein said main base has an aperture.

18. Apparatus according to claim **17** wherein said aperture has an elongated shape with a major side parallel to the rotation axes of the rotation spindles of the spin rollers.

19. Apparatus according to claim **18** wherein said major side of the aperture has length such to allow the fiber to move substantially freely while the spin rollers are traversed.

20. Apparatus according to claim 3 comprising a position adjusting apparatus.

21. Apparatus according to claim 15 wherein one of the spin rollers is fixed to the main base.

22. Apparatus according to claim **12** wherein the sledges are operatively connected to the reciprocating mechanism.

23. Apparatus according to claim 3 wherein the reciprocating mechanism comprises at least two connecting elements, each for one of the sledges, linking the sledges to an engine.

## Patentansprüche

1. Verfahren zum Herstellen einer Lichtleitfaser, das die folgenden Schritte umfasst:
- Ziehen einer Faser in einer Ziehrichtung (Y-Y) aus einer erhitzten Vorform durch Ausüben einer Ziehkraft auf die Faser;
- Drehen der Faser, während sie gezogen wird, wobei der Schritt des Drehens der Faser die folgenden Teilschritte umfasst:
- Anordnen einer ersten (3a) und einer zweiten (3b) parallelen Drehwalze an einander gegenüberliegenden Seiten der Faser,
- so dass die erste und die zweite parallele Drehwalze (3a, 3b)
- einander in der Ziehrichtung (Y-Y) teilweise überlappen,
- in der Drehrichtung voneinander beabstandet sind,
- wobei Längsachsen, die in einer gemeinsamen Ebene (A) liegen, einen Winkel (α₁) in Bezug auf eine Ebene senkrecht zu der Ziehrichtung bilden; und
- einen Zwischenraum (G) zwischen den jeweiligen Außenflächen bilden, der größer ist als der Außendurchmesser der Lichtleitfaser,
- Wickeln der Faser auf die erste Drehwalze (3a) in einem ersten Wickel-Bogen, so dass eine Reibungskraft zwischen der Faser und der ersten Drehwalze erzeugt wird, die durch den ersten Wickel-Bogen und die Ziehkraft verursacht wird;
- Wickeln der Faser auf die zweite Drehwalze (3b) in einem zweiten Wickel-Bogen, so dass eine Reibungskraft zwischen der Faser und der zweiten Drehwalze erzeugt wird, die durch den zweiten Wickel-Bogen und die Ziehkraft verursacht wird,
- Führen der Faser in einer vertikalen Ebene senkrecht zu den Drehwalzen-Achsen, indem die Faser veranlasst wird, zwischen einem Paar Führungswalzen (2a, 2b) hindurchzulaufen, die der ersten Drehwalze (3a) vorgelagert bzw. der zweiten Drehwalze (3b) nachgelagert sind, wobei die Führungswalzen (2a, 2b) eine Drehachse haben, die rechtwinklig zu der Drehachse der Drehwalzen ist;
- axiales Verschieben der ersten Drehwalze und der zweiten Drehwalze relativ zueinander, so dass die Faser durch die Reibungskraft veranlasst wird, über die Oberflächen der ersten und der zweiten Drehwalze zu rollen.

2. Verfahren nach Anspruch 1, wobei die erste Drehwalze und die zweite Drehwalze in entgegengesetzten Richtungen verschoben werden.

3. Vorrichtung zum Drehen einer Lichtleitfaser, die in einer Ziehrichtung gezogen wird, welche umfasst:
- eine erste und eine zweite parallele Drehwalze, die im Wesentlichen zylindrische Außenflächen haben, wobei die Drehwalzen
- voneinander in der Drehrichtung beabstandet sind,
- einen Zwischenraum (G) zwischen ihren Außenflächen bilden, der größer ist als der Außendurchmesser der Lichtleitfaser; und
- eine jeweilige Längsachse haben, die in einer gemeinsamen Ebene (A) liegt, die einen Winkel (α₁) in Bezug auf die Ebene senkrecht zu der Ziehrichtung bildet;
- einen Hin- und Herbewegungsmechanismus, der mit den Drehwalzen (3a, 3b) zur abwechselnden axialen Verschiebung derselben funktional verbunden ist,
- zwei Paare paralleler Führungswalzen (2a, 2b) mit Achsen, die in horizontalen Ebenen und senkrecht zu den Achsen der Drehwalzen (3a, 3b) liegen und die den paarigen Drehwalzen jeweils vorgelagert bzw. nachgelagert sind;
- wobei die erste (3a) und die zweite (3b) Drehwalze einander in der Ziehrichtung wenigstens teilweise überlappen, um eine durch sie hindurchgezogene Faser zu veranlassen, einen ersten Wickel-Bogen über der Außenfläche der ersten Drehwalze und einen zweiten Wickel-Bogen über der Außenfläche der zweiten Drehwalze (3b) zu bilden.

4. Vorrichtung nach Anspruch 3, wobei der Winkel α₁ einen Wert von 25° bis 35° hat.

5. Vorrichtung nach Anspruch 4, wobei der Winkel α₁ einen Wert von 27° bis 31° hat.

6. Vorrichtung nach Anspruch 3, wobei der Wickel-Bogen eine Ausdehnung von 1,5 % bis 5 % des Umfangs der Drehwalze hat.

7. Vorrichtung nach Anspruch 3, wobei der Zwischenraum zwischen den Drehwalzen von 1,5 bis 2,5 mm groß ist.

8. Vorrichtung nach Anspruch 7, wobei der Zwischenraum zwischen den Drehwalzen von 1,9 bis 2,1 mm groß ist.

9. Vorrichtung nach Anspruch 3, wobei die Oberfläche der Drehwalzen mit einer Beschichtung zum Erhöhen des Reibungskoeffizienten beschichtet ist.

10. Vorrichtung nach Anspruch 3, wobei die Drehwalzen über Drehspindeln an jeweiligen schwenkbaren Rahmen gelagert sind.

11. Vorrichtung nach Anspruch 10, wobei die schwenkbaren Rahmen mittels entsprechender Schwenkspindeln von Stützen getragen werden.

12. Vorrichtung nach Anspruch 11, wobei die Stützen an Schlitten befestigt sind.

13. Vorrichtung nach Anspruch 12, wobei die Schlitten an einem Paar Schienen entlang bewegt werden können.

14. Vorrichtung nach Anspruch 13, wobei die Schienen parallel zu den Drehachsen der Drehspindeln der Drehwalzen sind.

15. Vorrichtung nach Anspruch 14, wobei die paarigen Schienen an einem Hauptsockel befestigt sind.

16. Vorrichtung nach Anspruch 15, wobei der Hauptsockel an einem Ziehturm befestigt ist.

17. Vorrichtung nach Anspruch 16, wobei der Hauptsockel eine Öffnung aufweist.

18. Vorrichtung nach Anspruch 17, wobei die Öffnung eine längliche Form hat und eine Hauptseite parallel zu den Drehachsen der Drehspindeln der Drehwalzen ist.

19. Vorrichtung nach Anspruch 18, wobei die Hauptseite der Öffnung eine Länge hat, die es der Faser gestattet, sich im Wesentlichen frei zu bewegen, während die Drehwalzen hin- und herbewegt werden.

20. Vorrichtung nach Anspruch 3, die eine Positionseinstellvorrichtung umfasst.

21. Vorrichtung nach Anspruch 15, wobei eine der Drehwalzen an dem Hauptsockel befestigt ist.

22. Vorrichtung nach Anspruch 12, wobei die Schlitten funktional mit dem Hin- und Herbewegungs-Mechanismus verbunden sind.

23. Vorrichtung nach Anspruch 3, wobei der Hin- und Herbewegungs-Mechanismus wenigstens zwei verbindende Elemente, d h. eines für jeden der Schlitten, umfasst, die die Schlitten mit einem Motor verbinden.

## Revendications

1. Procédé de fabrication d'une fibre optique comprenant les étapes suivantes:
- l'étirage d'une fibre le long d'une direction d'étirage (Y-Y) à partir d'une préforme chauffée, en appliquant une force de traction à la fibre;
- le filage de la fibre alors qu'elle est étirée,
dans lequel l'étape de filage de la fibre comprend les sous-étapes suivantes:
- la mise en place d'un premier (3a) et d'un deuxième (3b) rouleaux de filage parallèles sur des côtés opposés de la fibre,
- ces premier et deuxième (3a, 3b) rouleaux de filage parallèles
- se chevauchant partiellement le long de la direction d'étirage (Y-Y),
- étant espacés l'un de l'autre le long de la direction d'étirage,
- ayant des axes longitudinaux situés dans un plan commun (A) formant un angle (α1) par rapport à un plan orthogonal à la direction d'étirage; et
- formant un espace (G), entre leurs surfaces extérieures, supérieur au diamètre extérieur de la fibre optique,
- l'enroulement de la fibre sur le premier rouleau de filage (3a) selon un premier arc d'enroulement, de manière qu'une force de frottement soit engendrée entre la fibre et le premier rouleau de filage résultant dudit premier arc d'enroulement et de ladite force de traction;
- l'enroulement de la fibre sur le deuxième rouleau de filage (3b) selon un deuxième arc d'enroulement, de manière qu'une force de frottement soit engendrée entre la fibre et le deuxième rouleau de filage résultant dudit deuxième arc d'enroulement et de ladite force de traction;
- le guidage de la fibre dans un plan vertical perpendiculaire aux axes de rouleaux de filage en forçant la fibre à passer entre une paire de rouleaux de guidage (2a, 2b) respectivement disposés en amont du premier rouleau de filage (3a) et en aval du deuxième rouleau de filage (3b), lesdits rouleaux de guidage (2a, 2b) ayant un axe de rotation orthogonal à l'axe de rotation des rouleaux de filage;
- le déplacement axial dudit premier rouleau de filage et dudit deuxième rouleau de filage l'un par rapport à l'autre de manière que la fibre soit forcée à rouler sur les surfaces des premier et deuxième rouleaux de filage par ladite force de frottement.

2. Procédé selon la revendication 1, dans lequel ledit premier rouleau de filage et ledit deuxième rouleau de filage sont déplacés dans des directions opposées.

3. Dispositif pour le filage d'une fibre optique étirée dans une direction d'étirage, comprenant
- des premier et deuxième rouleaux de filage parallèles ayant des surfaces extérieures sensiblement cylindriques, lesdits rouleaux de filage
- étant espacés l'un de l'autre le long de ladite direction d'étirage,
- formant un espace (G), entre leurs surfaces extérieures, supérieur au diamètre extérieur de la fibre optique, et
- ayant des axes longitudinaux respectifs se situant dans un plan commun (A) formant un angle (α1) par rapport au plan orthogonal à la direction d'étirage;
- un mécanisme de mouvement de va-et-vient relié fonctionnellement auxdits rouleaux de filage (3a, 3b) pour leur déplacement axial alternatif,
- deux paires de rouleaux de guidage parallèles (2a, 2b) à axes situés dans des plans horizontaux et perpendiculaires aux axes desdits rouleaux de filage (3a, 3b), et situés respectivement en amont et en aval de la paire de rouleaux de filage;
- dans lequel lesdits premier (3a) et deuxième (3b) rouleaux de filage se chevauchent au moins partiellement le long de ladite direction d'étirage, de manière à forcer une fibre étirée à travers ceux-ci à former un premier arc d'enroulement sur la surface extérieure du premier rouleau de filage et un deuxième arc d'enroulement sur la surface extérieure du deuxième rouleau de filage (3b).

4. Dispositif selon la revendication 3, dans lequel l'angle α₁ a une valeur de 25 degrés à 35 degrés.

5. Dispositif selon la revendication 4, dans lequel l'angle α₁ a une valeur de 27 degrés à 31 degrés.

6. Dispositif selon la revendication 3, dans lequel ledit arc d'enroulement a une extension de 1,5% à 5% de la circonférence du rouleau de filage.

7. Dispositif selon la revendication 3, dans lequel l'espace entre les rouleaux de filage a une largeur de 1,5 à 2,5 mm.

8. Dispositif selon la revendication 7, dans lequel l'espace entre les rouleaux de filage a une largeur de 1,9 à 2,1 mm.

9. Dispositif selon la revendication 3, dans lequel la surface des rouleaux de filage est revêtue par un revêtement d'amélioration du coefficient de frottement.

10. Dispositif selon la revendication 3, dans lequel les rouleaux de filage sont supportés, au moyen de broches de rotation, sur des châssis pivotants respectifs.

11. Dispositif selon la revendication 10, dans lequel lesdits châssis pivotants sont supportés par des étais, au moyen de broches d'articulation correspondantes.

12. Dispositif selon la revendication 11, dans lequel lesdits étais sont fixés sur des traîneaux.

13. Dispositif selon la revendication 12, dans lequel lesdits traîneaux sont mobiles le long d'une paire de pistes.

14. Dispositif selon la revendication 13, dans lequel lesdites pistes sont parallèles aux axes de rotation des broches de rotation des rouleaux de filage.

15. Dispositif selon la revendication 14, dans lequel les paires de pistes sont fixées à une base principale.

16. Dispositif selon la revendication 15, dans lequel ladite base principale est fixée sur une tour d'étirage.

17. Dispositif selon la revendication 16, dans lequel ladite base principale a une ouverture.

18. Dispositif selon la revendication 17, dans lequel ladite ouverture a une forme allongée avec un côté principal parallèle aux axes de rotation des broches de rotation des rouleaux de filage.

19. Dispositif selon la revendication 18, dans lequel ledit côté principal de l'ouverture a une longueur telle qu'elle permet à la fibre de se déplacer sensiblement librement alors que les rouleaux de filage sont traversés.

20. Dispositif selon la revendication 3, comprenant un dispositif de réglage de position.

21. Dispositif selon la revendication 15, dans lequel un des rouleaux de filage est fixé à la base principale.

22. Dispositif selon la revendication 12, dans lequel les traîneaux sont reliés fonctionnellement au mécanisme de mouvement de va-et-vient.

23. Dispositif selon la revendication 3, dans lequel le mécanisme de mouvement de va-et-vient comprend au moins deux éléments de liaison, chacun pour un des traîneaux, reliant les traîneaux à un moteur.
